# EUROPÄISCHE PATENTSCHRIFT

(11) **EP 2 206 449 B1**
(45) Veröffentlichungstag und Bekanntmachung des Hinweises auf die Patenterteilung: **26.08.2015**
(21) Anmeldenummer: 09405002.8
(22) Anmeldetag: 09.01.2009
(51) Int. Cl.: A47B 13/08, F16B 12/18

(54) **Spannvorrichtung zum Vorspannen eines Möbelbauteils**
Tensioning device for pre-tensioning a furniture component
Dispositif de serrage destiné à la pré-tension d'un élément de meuble

(43) Veröffentlichungstag der Anmeldung: 14.07.2010
(73) Patentinhaber: Meyer AG, 6373 Ennetbürgen (CH)
(72) Erfinder: Meyer, Rudolf, 6373 Ennetbürgen (CH)
(74) Vertreter: Nückel, Thomas

(56) Entgegenhaltungen:
- WO-A-03/063968
- DE-U1- 20 106 963
- DE-U1- 20 112 944
- US-A- 3 077 967

## Beschreibung

### Technisches Gebiet

Die Erfindung betrifft eine Spannvorrichtung zum Vorspannen eines Möbelbauteils und ist insbesondere im Möbelbau zum Vorspannen von grossen Platten, Fachböden und Anrichten verwendbar.

### Stand der Technik

Bei einem großen Tisch neigt die Tischplatte dazu, sich in der Tischmitte aufgrund ihres Eigengewichts nach unten zu wölben. Dies ist insbesondere dann der Fall, wenn die Tischplatte lang und die Beine des Tisches in den Ecken der Tischplatte angeordnet sind. Um dem entgegenzuwirken und die Tischplatte wieder plan auszurichten, kann die Tischplatte mit Hilfe einer auf der Unterseite der Tischplatte angeordneten Spannvorrichtung derart stark vorgespannt werden, dass die Wölbung der Tischplatte ausgeglichen wird.

Aus der Gebrauchsmusterschrift DE 201 12 944 U1 ist eine Tischplatte bekannt, wobei auf einer Seite der Tischplatte eine Spannvorrichtung angeordnet ist. Die Spannvorrichtung umfasst eine Spannstange, die sich nahezu über die Länge der Tischplatte erstreckt. Die Enden der Spannvorrichtung sind jeweils in einem mit der Tischplatte fest verbundenen Widerlager gelagert. Zudem ist ein verstellbares Spannelement in Form einer Schraube vorgesehen, das mit der Spannstange verbunden ist und bei dessen Betätigung die Widerlager relativ zueinander bewegbar sind. Diese Spannvorrichtung hat allerdings den folgenden Nachteil. Für eine lange Tischplatte ist demzufolge auch eine lange Spannstange notwendig, um die gesamte Tischplatte vorzuspannen. Eine derart lange Spannstange ist allerdings unhandlich und der Aufwand sowie die Kosten für die Verpackung und den Transport sind erheblich. Die Spannvorrichtung ist insgesamt relativ schwer und sperrig und damit nicht besonders gut geeignet, um als separates Bauteil über den Versandhandel vertrieben zu werden.

Aus der Gebrauchsmusterschrift DE 201 06 963 U1 ist eine weitere Spannvorrichtung bekannt, bei der zwischen zwei Spannböcken eine Spannstange oder ein Spannseil vorgesehen ist. Die mit der Spannstange ausgestattete Spannvorrichtung weist die selben Nachteile wie die oben beschriebene Spannvorrichtung auf. Die mit dem Spannseil ausgestattete Spannvorrichtung hat den Nachteil, dass sie nicht ohne weiteres spannbar ist und auch nicht ohne weiteres jederzeit nachgespannt werden kann. Darüber hinaus haben die in der Gebrauchsmusterschrift DE 201 06 963 U1 beschriebenen Ausführungsformen der Spannvorrichtung den Nachteil, dass sie nicht in die Tischplatte versenkt werden können. Diese Ausführungsformen ragen auf der Unterseite der Tischplatte heraus und erschweren dadurch, dass die Tischplatte mit einem Auszug, beispielsweise einer Schublade oder eine Tischplattenverlängerung, ausgestattet werden kann.

### Darstellung der Erfindung

Eine Aufgabe der Erfindung ist es eine Spannvorrichtung zum Vorspannen eines Möbelbauteils anzugeben, die leicht und nicht sperrig ist, so dass sie ohne weiteres transportiert und versandt werden kann.

Erfindungsgemäß ist die Spannvorrichtung zum Vorspannen eines Möbelbauteils derart ausgebildet, dass sie in das Möbelbauteil eingelassen werden kann. Dadurch wird erreicht, dass unterhalb der Spannvorrichtung ohne weiteres weitere Bauteile, wie beispielsweise Schubladen oder Tischplattenverlängerungen, angebaut werden können. Wird die Spannvorrichtung bei einem Tisch eingesetzt, hat sie den Vorteil, dass durch sie die Beinfreiheit unter dem Tisch nicht beschränkt wird.

Ein weiterer Vorteil der Spannvorrichtung besteht darin, dass sie platzsparend, technisch einfach herstellbar, robust und auch unter hoher Belastung stabil ist.

Darüber hinaus hat die erfindungsgemässe Spannvorrichtung den Vorteil, dass die Länge des Spannbands erst dann festgelegt werden muss, wenn der Tisch beziehungsweise das Möbelbauteil montiert wird.

Die Aufgabe wird durch eine Spannvorrichtung zum Vorspannen eines Möbelbauteils mit den Merkmalen gemäss Patentanspruchs 1 gelöst.

Die erfindungsgemässe Spannvorrichtung zum Vorspannen eines Möbelbauteils umfasst einen Spannblock und ein Spannband, das am Spannblock befestigt ist. Zudem umfasst die Spannvorrichtung ein Widerlager und ein Spannelement, um den Spannblock relativ zum Widerlager zu spannen.

Vorteilhafte Weiterbildungen der Erfindung ergeben sich aus den in den abhängigen Patentansprüchen angegebenen Merkmalen.

Bei einer Ausführungsform der erfindungsgemässen Spannvorrichtung ist das Spannband aus Stahl. Dies hat den Vorteil, dass mit der Spannvorrichtung ausserordentlich grosse Kräfte auf das Möbelbauteil übertragbar sind.

Bei einer weiteren Ausführungsform der erfindungsgemässen Spannvorrichtung weist das Spannband Löcher auf.

Bei einer Weiterbildung der erfindungsgemässen Spannvorrichtung ist eine Schraube vorgesehen, um das Spannband am Spannblock zu fixieren.

Bei einer anderen Weiterbildung der erfindungsgemässen Spannvorrichtung ist die Schraube eine Madenschraube, die am Ende spitz ausgebildet ist. Dadurch wird auf das Spannband eine punktuelle Kraft ausgeübt und das Spannband so verformt, dass zusätzlich zum Reibschluss auch ein Formschluss entsteht. Vorteilhafter Weise wird dadurch der Kraftschluss noch verbessert und das Spannband noch besser am Spannblock fixiert.

Bei einer dritten Weiterbildung der erfindungsgemässen Spannvorrichtung umfasst das Spannelement eine Schraube mit einem Schraubenkopf, der sich am Widerlager abstützt. Vorteilhafterweise ist bei der erfindungsgemässen Spannvorrichtung der Spannblock derart ausgebildet, dass der Versatz zwischen der Längsachse des Spannbands und der Längsachse der zum Spannen benutzten Schraube möglichst gering ist. Auf diese Weise wird das Drehmoment, das beim Spannen entsteht und auf den Spannblock und das Widerlager wirkt, reduziert und die Tendenz, dass das Widerlager und der Spannblock aus der Nut in der Platte herauswandern, verringert sich.

Darüber hinaus kann bei der erfindungsgemässen Spannvorrichtung das Widerlager eine Verrutschsicherung aufweisen.

Nach einem weiteren Merkmal der Erfindung kann bei der Spannvorrichtung das Widerlager als Verrutschsicherung eine Ausbuchtung, eine Riffelung oder einen Dorn aufweisen. Zusätzlich oder alternativ dazu kann die Verrutschsicherung des Widerlagers dadurch gebildet werden, dass das Widerlager gekrümmt ist.

Zudem wird vorgeschlagen, dass der Spannblock der Spannvorrichtung eine Nut aufweist, um das Spannband aufzunehmen. Durch die Nut wird zum einen das Spannband geführt und zum anderen zwischen dem Spannband und dem Spannbock ein Formschluss geschaffen.

Schliesslich kann bei der erfindungsgemässen Spannvorrichtung der Spannblock schwalbenschwanzförmig ausgebildet sein. Dadurch wird verhindert, dass durch das Drehmoment, das beim Spannen entsteht, der Spannblock aus der Nut der Platte herauswandert.

Bei dem erfindungsgemässen Möbelbauteil mit der Spannvorrichtung sind eine erste Quernut, in der das Widerlager angeordnet ist, und eine erste Längsnut in der der Spannblock angeordnet ist, vorgesehen. Zudem sind eine zweite Quernut, in der ein weiteres Widerlager angeordnet ist, und eine zweite Längsnut, in der ein weiterer Spannblock angeordnet ist, vorgesehen. Vorteilhafter Weise lässt sich dadurch die Spannvorrichtung in dem Möbelbauteil versenken, so dass sie mit der Unterseite des Möbelbauteils eine plane oder annähernd plane Fläche bildet.

Bei einer Ausführungsform des Möbelbauteils ist eine weitere Längsnut in dem Möbelbauteil vorgesehen, in der das Spannband angeordnet ist. Dadurch kann die Unterseite des Möbelbauteils noch planer gestaltet werden.

Bei einer weiteren Ausführungsform des Möbelbauteils ist die Längsnut schwalbenschwanzförmig ausgebildet. Dadurch wird der Spannblock in der Längsnut geführt und verhindert, dass der Spannblock aus der Nut der Platte herauswandert, wenn die Spannvorrichtung gespannt wird.

Zudem kann bei dem Möbelbauteil vorgesehen sein, dass die Spannvorrichtung parallel zur Längsseite des Möbelbauteils angeordnet ist.

Schliesslich kann die Spannvorrichtung für eine Tischplatte, eine Anrichte, ein Sideboard oder einen Fachboden verwendet werden.

### Kurze Beschreibung der Zeichnungen

Im Folgenden wird die Erfindung mit mehreren Ausführungsbeispielen anhand von 12 Figuren weiter erläutert.
- Figur 1: zeigt eine Platte, in die zwei der erfindungsgemässen Spannvorrichtungen eingelassen sind.
- Figur 2: zeigt ein Detail der Platte und der erfindungsgemässen Spannvorrichtung in einer dreidimensionalen Ansicht.
- Figur 3: zeigt eine erste mögliche Ausführungsform der erfindungsgemässen Spannvorrichtung in einer Explosionsdarstellung.
- Figur 4: zeigt die erste Ausführungsform der erfindungsgemässen Spannvorrichtung in der Ansicht von unten.
- Figur 5: zeigt die erste Ausführungsform der erfindungsgemässen Spannvorrichtung in der Seitenansicht.
- Figur 6: zeigt die erste Ausführungsform der erfindungsgemässen Spannvorrichtung von der Seite im Schnitt.
- Figur 7: zeigt das Widerlager der Spannvorrichtung in einer dreidimensionalen Ansicht.
- Figur 8: zeigt das Widerlager der Spannvorrichtung in der Seitenansicht von vorne.
- Figur 9: zeigt das Widerlager der Spannvorrichtung in einer Seitenansicht von hinten.
- Figur 10: zeigt das Widerlager der Spannvorrichtung in einer weiteren Seitenansicht.
- Figur 11: zeigt eine zweite mögliche Ausführungsform der erfindungsgemässen Spannvorrichtung in einer dreidimensionalen Ansicht.
- Figur 12: zeigt einen Ausschnitt der Möbelplatte mit einer Aussparung zur Aufnahme der Spannvorrichtung in einer dreidimensionalen Ansicht.

### Wege zur Ausführung der Erfindung

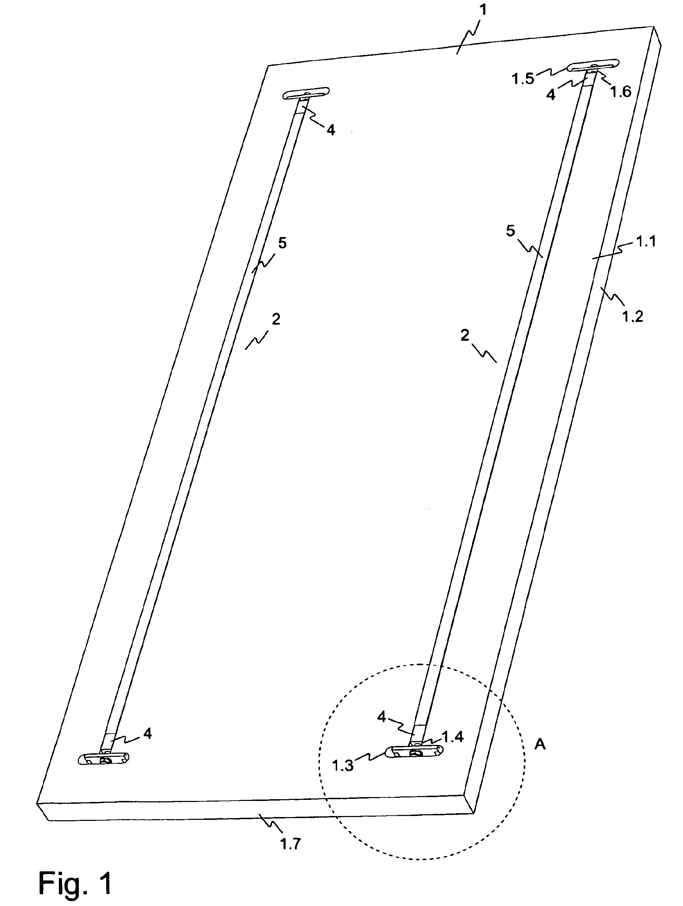

In Figur 1 ist eine Möbelplatte 1 in einer dreidimensionalen Ansicht dargestellt, wobei in die Unterseite 1.1 der Möbelplatte 1 zwei Spannvorrichtungen 2 eingelassen sind. Die Möbelplatte 1, welche im Folgenden auch als Platte bezeichnet wird, kann beispielsweise eine Tischplatte, ein Fachboden (Brett eines Regals oder Tablar), die Bodenplatte einer Anrichte oder eines Sideboards sein. Die Platte 1 kann beispielsweise aus Massivholz gefertigt sein. Die eine Spannvorrichtung 2 befindet sich auf der linken Unterseite der Platte 1 und die andere Spannvorrichtung 2 auf der rechten Unterseite der Platte 1. Beide Spannvorrichtungen 2 sind bei der in Figur 1 gezeigten Variante parallel zur Längsseite 1.2 der Platte 1 angeordnet.

Die Orientierung der Spannvorrichtungen 2 und die Anzahl der verwendeten Spannvorrichtungen hängt unter anderem von der Länge, der Breite und der Dicke der Platte 1 ab. Auch das Material aus dem die Platte 1 ist, spielt hierbei eine Rolle.

Gegenüber der Variante mit nur einer Spannvorrichtung kann mit den beiden Spannvorrichtungen die doppelte Spannkraft in die Platte 1 eingeleitet werden. Zudem kann durch die Anzahl und die Anrodung der Spannvorrichtungen bestimmt werden, wo und in welchem Mass Spannkräfte auf die Platte 1 ausgeübt werden sollen.

Es ist auch möglich die beiden Spannvorrichtungen 2 auf der Unterseite 1.1 der Platte 1 diagonal anzuordnen. Die gekreuzte oder diagonale Anordnung der Spannvorrichtungen 2 kann sinnvoll sein, wenn die Platte 1 sich nicht nur in Längsrichtung, sondern auch quer dazu wölbt.

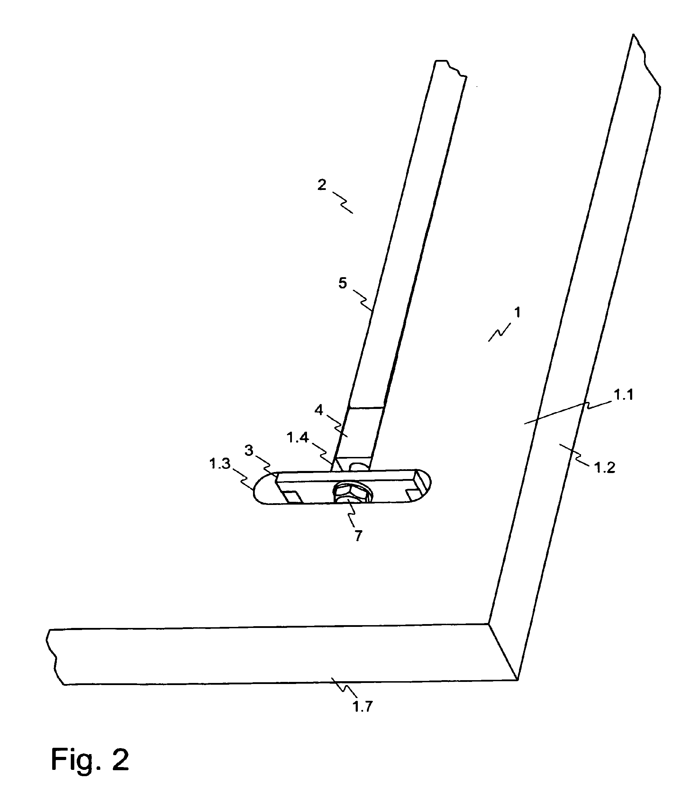

Figur 2 zeigt ein Detail A der Platte 1 und der erfindungsgemässen Spannvorrichtung 2 in einer dreidimensionalen Ansicht. Die Spannvorrichtung 2 umfasst einen Spannblock 4 und ein Spannband 5, das am Spannblock 4 befestigt ist. Zudem umfasst die Spannvorrichtung 2 ein Widerlager 3 und eine Spannschraube 7, um den Spannblock 4 relativ zum Widerlager 3 zu spannen. Um die Spannvorrichtung 2 in die Platte 1 einlassen zu können, befindet auf der Unterseite 1.1 der Platte 1 eine Quernut 1.3, in der das Widerlager 3 angeordnet ist. Darüber hinaus befindet sich in der Unterseite 1.1 der Platte 1 eine Längsnut 1.4, in der sich der Spannblock 4 befindet. Vorteilhafter Weise sind die Quernut 1.3 und die Längsnut so tief, dass die oberen Flächen des Widerlagers 3 und des Spannblocks 4 mit der Unterseite 1.1 der Platte 1 eine ebene Fläche bilden. Auch das Spannband 5 kann in eine entsprechend tiefe Längsnut eingelassen sein. Auf diese Weise wird sicher gestellt, dass die Spannvorrichtung 2 nicht aus der Platte 1 heraus ragt.

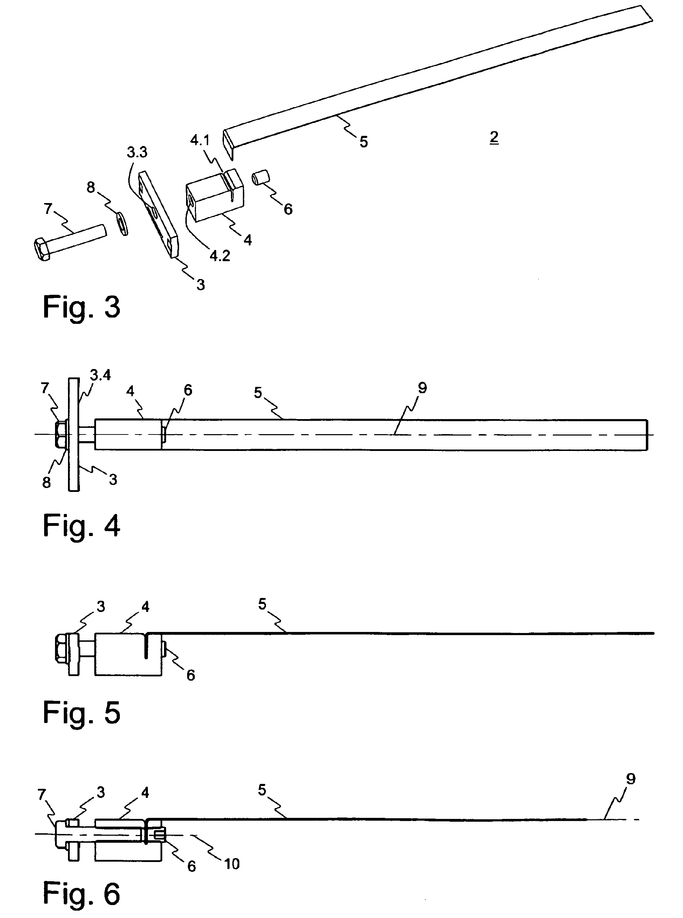

In Figur 3 ist die erste mögliche Ausführungsform der erfindungsgemässen Spannvorrichtung 2 in einer Explosionsansicht dargestellt.

Das linke Ende des Spannbands 5 ist abgekantet und wird zum Befestigen in die Nut 4.1 des Spannblocks 4 eingeführt. Um das Ende des Spannbands 5 in der Nut 4.1 zu fixieren, befindet sich am Spannblock 4 eine Madenschraube 6, mit der das Ende des Spannbands 5 im Spannblock festgeklemmt wird. Das Ende der Madenschraube 6, das auf das Spannband 5 drückt, kann spitz verlaufen, so dass trotz gleichbleibender Anzugskraft der Druck auf das Spannband 5 erhöht wird, was zu einer Verformung des Spannbands 5 führt. Dadurch wird nicht nur ein Reibschluss, sondern auch ein Formschluss zwischen dem Spannband 5 und der Madenschraube 6 geschaffen. Auf diese Weise wird das Spannband 5 noch besser im Spannblock 4 fixiert.

In Figur 3 ist lediglich am linken Ende des Spannbands 5 der Spannblock 4 mit der Spannschraube 7 und dem Widerlager 3 gezeigt. In der Regel befindet sich, wie in Figur 1 gezeigt, auch am rechten Ende des Spannbands 5 ein Spannblock 4 mit einer Spannschraube 7 und einem Widerlager 3.

Das rechte Ende des Spannbands 5 kann aber auch auf beliebige andere Weise mit der Möbelplatte 1 verbunden werden.

Die Spannschraube 7 wird durch ein Loch 3.3 im Widerlager 3 geführt und in ein entsprechendes Gewinde 4.2 am Spannblock 4 geschraubt. Der Kopf der Spannschraube 7 stützt sich über eine Beilagscheibe 8 am Widerlager 3 ab. Befindet sich die Spannvorrichtung 2 im eingebauten Zustand, wie dies in den Figuren 1 und 2 gezeigt ist, kann mit Hilfe der Spannschraube 7, die im Folgenden auch als Spannelement bezeichnet wird, die Spannung und damit die Spannkraft eingestellt werden, die über das Widerlager 3 in die Möbelplatte 1 eingeleitet wird. Je grösser die in die Möbelplatte 1 eingeleitete Spannkraft ist, desto grösser wird auch die in der Möbelplatte 1 quer zur Spannkraft wirkende Kraft. Auf diese Weise kann durch ein Verstellen der Spannschraube 7 dafür gesorgt werden, dass sich die Möbelplatte 1 mehr oder weniger stark wölbt.

Der Kopf der Spannschraube 7 ist vorteilhafter Weise als Sechskantkopf ausgebildet. Dies hat den Vorteil, dass die Spannschraube 7 mit einem Gabel- oder Ringschlüssel gedreht werden kann und zudem hohe Drehmomente in die Spannschraube 7 eingeleitet werden können. Die Grösse und das Material der Spannschraube 7 sind so gewählt, dass die Spannschraube 7 der beim Spannen erzeugten Kraft stand hält. In diesem Zusammenhang kann es von Vorteil sein, wenn die Spannschraube 7 aus einem gehärteten Stahl besteht.

Figur 4 zeigt die erste Ausführungsform der erfindungsgemässen Spannvorrichtung 2 in der Ansicht von unten und Figur 5 zeigt die erste Ausführungsform der erfindungsgemässen Spannvorrichtung in der Seitenansicht.

In Figur 6 ist die erste Ausführungsform der erfindungsgemässen Spannvorrichtung 2 von der Seite im Schnitt gezeigt. Dabei ist zu erkennen, dass die Längsachse 9 des Spannbands 5 zur Längsachse der Spannschraube 7 versetzt ist. Wird durch die Spannschraube 7 eine Spannkraft aufgebaut, führt diese zu einem Drehmoment, das bewirkt, dass das Widerlager 3 und der Spannblock 4 die Tendenz haben aus der Platte 1 heraus zu wandern. Deshalb ist es von Vorteil, den Versatz zwischen der Längsachse 9 des Spannbands 5 und der Längsachse 10 der Spannschraube 7 möglichst klein zu halten.

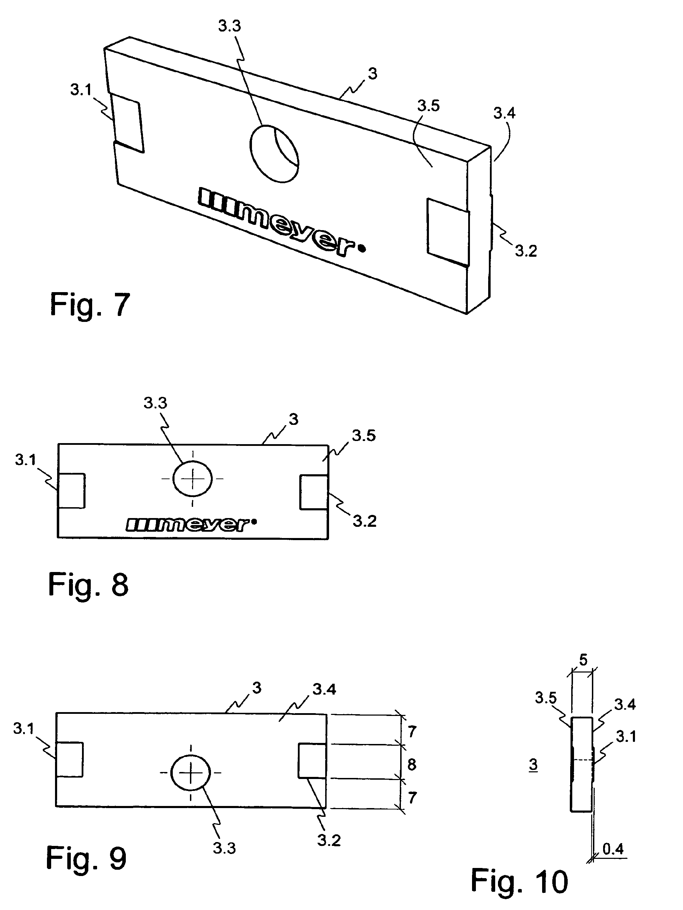

Um zu verhindern, dass das Widerlager 3 aus der Quernut 1.3 heraus wandert, kann das Widerlager 3, wie in Figur 7 gezeigt, mit zwei Verrutschsicherungen 3.1 und 3.2 ausgestattet sein. Bei den beiden Verrutschsicherungen 3.1 und 3.2 handelt es sich um Ausbuchtungen im Widerlager 3. Im eingebauten Zustand werden die beiden Ausbuchtungen 3.1 und 3.2 in die Platte 1 gedrückt, sobald die Spannschraube 7 angezogen wird. Dadurch bilden die beiden Ausbuchtungen 3.1 und 3.2 mit der Patte 1 einen Formschluss.

Statt der beiden Ausbuchtungen 3.1 und 3.2 kann das Widerlager 3 auf seiner der Platte 1 zugewandten Seite auch mit Riffelungen oder einem Dorn ausgestattet sein. Zusätzlich oder alternativ dazu kann das Widerlager 3 auch leicht gekrümmt sein. Dadurch wird beim Spannen ein ähnlicher Effekt erzeugt und das Widerlager 3 daran gehindert, aus der Platte 1 heraus zu wandern.

Figur 8 zeigt das Widerlager 3 der Spannvorrichtung 2 in der Seitenansicht von vorne und Figur 9 zeigt das Widerlager 3 in einer Seitenansicht von hinten, das heisst die der Platte 1 zugewandte Seite 3.4. Figur 10 zeigt das Widerlager 3 in einer weiteren Seitenansicht.

Die Ausbuchtungen 3.1 und 3.2 können durch Pressen oder Stanzen erzeugt werden und beispielsweise 8 mm hoch und 0,4 mm tief sein. Auf der Vorderseite 3.5 befinden sich dann entsprechende Vertiefungen. Das Widerlager 3 kann insgesamt beispielsweise 25 mm hoch und 5 mm dick sein. Selbstverständlich sind auch andere Masse möglich.

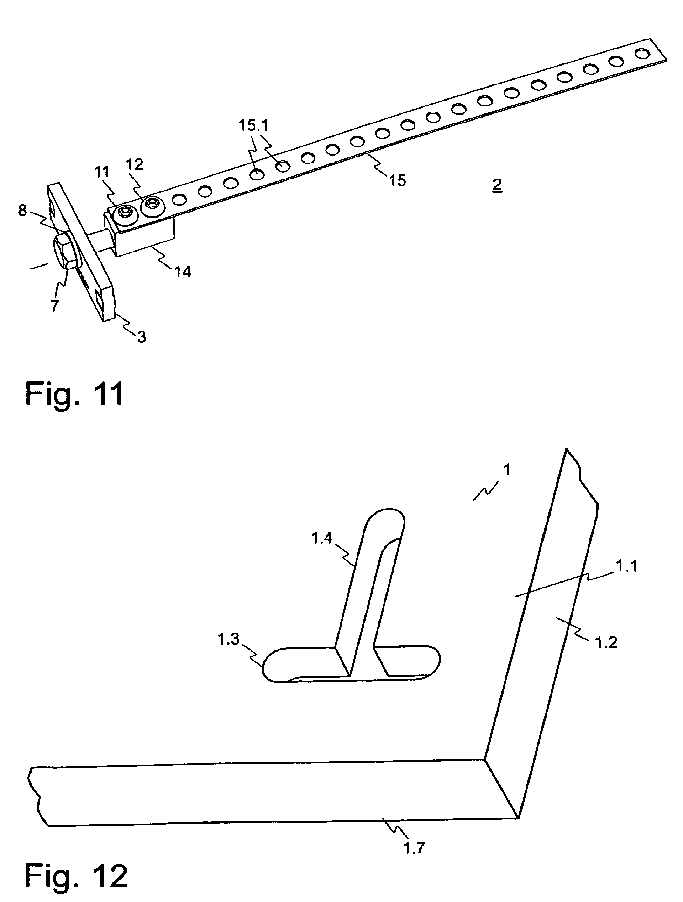

Figur 11 zeigt eine zweite mögliche Ausführungsform der erfindungsgemässen Spannvorrichtung 2 in einer dreidimensionalen Ansicht. Die Spannvorrichtung gemäss Figur 11 unterscheidet sich von der in den Figuren 1 bis 10 dargestellten Ausführungsform dadurch, dass das Spannband als Lochband 15 ausgebildet ist und eine Reihe von Löchern 15.1 aufweist. Bei der Ausführungsform gemäss Figur 11 wird das Spannband nicht mehr abgekantet, in die Nut 4.1 des Spannblocks 4 gesteckt und mit der Madenschraube 6 fixiert, sondern mit Hilfe zweier Schrauben 11 und 12 auf einen entsprechend ausgebildeten Spannblock 14 geschraubt. Bei dieser Ausführungsform entfällt am Spannblock 14 die Madenschraube 6.

Figur 12 zeigt einen Ausschnitt der Möbelplatte 1 mit den Aussparungen 1.3 und 1.4 zur Aufnahme der Spannvorrichtung 2 in einer dreidimensionalen Ansicht. Die Aussparung 1.3 wird auch als Quernut bezeichnet und verläuft parallel zur Stirnseite 1.7 der Platte 1. Die Aussparung 1.4 wird auch als Längsnut bezeichnet und verläuft parallel zur Längsseite 1.2 der Platte 1. Die Quernut 1.3 und/oder die Längsnut 1.4 können im Querschnitt schwalbenschanzförmig ausgebildet sein. Die Nuten 1.3 und 1.4 können beispielsweise mit einer computergesteuerten Fräsmaschine aus der Möbelplatte 1 herausgefräst werden. Es ist aber auch möglich, die Nuten 1.3 und 1.4 mit einer Oberfräse und einer Schablone aus der Möbelplatte 1 herauszufräsen.

In der Praxis wird das Spannband 5 beziehungsweise 15 vorteilhafter Weise als Rollenmaterial geliefert und vor Ort auf die gewünschte Länge gekürzt. Auf diese Weise kann die Länge des Spannbands jederzeit an die baulichen Gegebenheiten angepasst und der Verschnitt minimiert werden. Dadurch entsteht so gut wie kein Materialverlust.

Um ausreichend hohe Spannkräfte in die Platte 1 einleiten zu können, ist es von Vorteil, wenn das Spannband 5 beziehungsweise 15 aus Stahl, beispielsweise Edelstahl, gefertigt ist. Mit einem Spannband 5 aus Edelstahl, das 16 mm breit und 0,75 mm dick ist, kann durch die Spannvorrichtung 2 eine Spannkraft von rund 20 kN in die Platte 1 eingeleitet werden.

Das Widerlager 3 und der Spannblock 4 können beispielsweise aus Stahl, Messing oder Aluminium gefertigt sein. Der Spannblock 4 kann auch im Druckgussverfahren hergestellt werden.

Die vorhergehende Beschreibung der Ausführungsbeispiele gemäss der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen. So sind beispielsweise die Merkmale der verschiedenen Ausführungsformen miteinander kombinierbar.

### Bezugszeichenliste

- 1: Platte
- 1.1: Unterseite der Platte
- 1.2: Längsseite der Platte
- 1.3: Quernut
- 1.4: Längsnut
- 1.5: Quernut
- 1.6: Längsnut
- 1.7: Stirnseite der Platte
- 2: Spannvorrichtung
- 3: Widerlager
- 3.1: Verrutschsicherung
- 3.2: Verrutschsicherung
- 3.3: Loch
- 3.4: Rückseite des Widerlagers
- 3.5: Vorderseite des Widerlagers
- 4: Spannblock
- 4.1: Nut
- 4.2: Gewinde
- 5: Spannband
- 6: Schraube
- 7: Schraube
- 8: Beilagscheibe
- 9: Längsachse des Spannbands
- 10: Längsachse der Schraube
- 11: Schraube
- 12: Schraube
- 14: Spannblock
- 15: Spannband
- 15.1: Loch im Spannband

## Patentansprüche

1. Spannvorrichtung zum Vorspannen eines Möbelbauteils,
- mit einem Spannblock (4; 14),
- mit einem Spannband (5; 15), das am Spannblock (4; 14) befestigt ist,
- mit einem Widerlager (3),
- mit einem Spannelement (7), um den Spannblock (4; 14) relativ zum Widerlager (3) zu spannen, und
- bei der der Spannblock (4; 14) und das Widerlager (3) derart ausgebildet sind, dass sie in das Möbelbauteil (1), insbesondere in eine Tischplatte, eingelassen werden können.

2. Spannvorrichtung nach Patentanspruch 1,
bei der das Spannband (5; 15) aus Stahl ist.

3. Spannvorrichtung nach Patentanspruch 1 oder 2,
bei der das Spannband (15) Löcher (15.1) aufweist.

4. Spannvorrichtung nach Patentanspruch 1, 2 oder 3,
mit einer Schraube (6; 11, 12), um das Spannband (5; 15) am Spannblock (4; 14) zu fixieren.

5. Spannvorrichtung nach Patentanspruch 4,
bei der die Schraube (6) eine Madenschraube ist, die am Ende spitz ausgebildet ist.

6. Spannvorrichtung nach einem der Patentansprüche 1 bis 5,
bei der das Spannelement (7) eine Schraube mit einem Schraubenkopf ist, der sich am Widerlager (3) abstützt.

7. Spannvorrichtung nach einem der Patentansprüche 1 bis 6,
bei der der Spannblock (4; 14) derart ausgebildet ist, dass der Versatz zwischen der Längsachse (9) des Spannbands (5; 15) und der Längsachse (10) der Schraube (7) möglichst gering ist.

8. Spannvorrichtung nach einem der Patentansprüche 1 bis 7,
bei der das Widerlager (3) eine Verrutschsicherung (3.1; 3.2) aufweist.

9. Spannvorrichtung nach Patentanspruch 8,
bei der das Widerlager (3) als Verrutschsicherung eine Ausbuchtung (3.1; 3.2), eine Riffelung oder einen Dorn aufweist und/oder gekrümmt ist.

10. Spannvorrichtung nach einem der Patentansprüche 1 bis 9,
bei der der Spannblock (4) eine Nut (4.1) aufweist, um das Spannband (5) aufzunehmen.

11. Spannvorrichtung nach einem der Patentansprüche 1 bis 10,
bei der der Spannblock (4) schwalbenschanzförmig ausgebildet ist.

12. Möbelbauteil mit der Spannvorrichtung nach einem der Patentansprüche 1 bis 11,
- mit einer ersten Quernut (1.3), in der das Widerlager (3) angeordnet ist,
- mit einer ersten Längsnut (1.4), in der der Spannblock (4; 14) angeordnet ist,
- mit einer zweiten Quernut (1.5), in der ein weiteres Widerlager (3) angeordnet ist, und
- mit einer zweiten Längsnut (1.6), in der ein weiterer Spannblock (4; 14) angeordnet ist.

13. Möbelbauteil nach Patentanspruch 12,
mit einer weiteren Längsnut, in der das Spannband (5; 15) angeordnet ist.

14. Möbelbauteil nach Patentanspruch 12 oder 13,
bei der die Längsnut (1.4; 1.6), in der der Spannblock (4; 14) angeordnet ist, schwalbenschwanzförmig ausgebildet ist.

15. Möbelbauteil nach einem der Patentansprüche 12 bis 14,
mit einer Längsseite (1.2), wobei die Spannvorrichtung (2) parallel zur Längsseite (1.2) angeordnet ist.

16. Verwendung der Spannvorrichtung nach einem der Patentansprüche 1 bis 11,
für eine Tischplatte, eine Anrichte, ein Sideboard oder einen Fachboden.

## Claims

1. A tensioning device for pretensioning a furniture component,
- comprising a tensioning block (4; 14),
- comprising a tensioning strap (5; 15) that is attached to the tensioning block (4; 14),
- comprising a counter bearing (3),
- comprising a tensioning element (7) to tension the tensioning block (4; 14) in relation to the counter bearing (3), and
- the tensioning block (4; 14) and the counter bearing (3) in said tensioning device being formed in such a way that they can be set into the furniture component (1), more particularly into a table top.

2. The tensioning device according to claim 1,
in which the tensioning strap (5; 15) is made of steel.

3. The tensioning device according to claim 1 or 2,
in which the tensioning strap (15) includes holes (15.1).

4. The tensioning device according to claim 1, 2, or 3,
comprising a screw (6; 11, 12) to fix the tensioning strap (5; 15) in position on the tensioning block (4; 14).

5. The tensioning device according to claim 4,
in which the screw (6) is a set screw which is formed such that it is pointed at its end.

6. The tensioning device according to any one of claims 1 to 5,
in which the tensioning element (7) is a screw having a screw head that is supported against the counter bearing (3).

7. The tensioning device according to any one of claims 1 to 6,
in which the tensioning block (4; 14) is formed in such a way that the offset between the longitudinal axis (9) of the tensioning strap (5; 15) and the longitudinal axis (10) of the screw (7) is as small as possible.

8. The tensioning device according to any one of claims 1 to 7,
in which the counter bearing (3) includes an anti-skid system (3.1; 3.2).

9. The tensioning device according to claim 8,
in which the counter bearing (3) includes an indentation (3.1; 3.2), a serration or a spike as anti-skid system and/or is curved.

10. The tensioning device according to any one of claims 1 to 9,
in which the tensioning block (4) includes a groove (4.1) to receive the tensioning strap (5).

11. The tensioning device according to any one of claims 1 to 10,
in which the tensioning block (4) has the form of a dovetail.

12. A furniture component having the tensioning device according to any one of claims 1 to 11,
- comprising a first crosswise groove (1.3) in which the counter bearing (3) is arranged,
- comprising a first longitudinal groove (1.4) in which the tensioning block (4; 14) is arranged,
- comprising a second crosswise groove (1.5) in which a further counter bearing (3) is arranged, and
- comprising a second longitudinal groove (1.6) in which a further tensioning block (4; 14) is arranged.

13. The furniture component according to claim 12,
comprising a further longitudinal groove in which the tensioning strap (5; 15) is arranged.

14. The furniture component according to claim 12 or 13,
in which the longitudinal groove (1.4; 1.6) in which the tensioning block (4; 14) is arranged has the form of a dovetail.

15. The furniture component according to any one of claims 12 to 14,
comprising a longitudinal side (1.2) wherein the tensioning device (2) is arranged parallel to the longitudinal side (1.2).

16. A use of the tensioning device according to any one of claims 1 to 11,
for a table top, a buffet, a sideboard, or a shelf.

## Revendications

1. Dispositif de serrage destiné à la pré-tension d'un élément de meuble,
- comprenant un bloc de serrage (4; 14),
- comprenant une bande de serrage (5 ; 15) qui est fixée sur le bloc de serrage (4; 14),
- comprenant un contre-palier (3),
- comprenant un élément de serrage (7) pour serrer le bloc de serrage (4; 14) par rapport au contre-palier (3), et
- dans lequel le bloc de serrage (4; 14) et le contre-palier (3) sont ainsi conçus qu'ils peuvent être encastrés dans l'élément de meuble (1), en particulier dans un plateau de table.

2. Dispositif de serrage selon la revendication 1,
dans lequel la bande de serrage (5; 15) est en acier.

3. Dispositif de serrage selon la revendication 1 ou 2,
dans lequel la bande de serrage (15) présente des trous (15.1).

4. Dispositif de serrage selon la revendication 1, 2 ou 3,
comprenant une vis (6; 11, 12) pour fixer la bande de serrage (5; 15) sur le bloc de serrage (4; 14).

5. Dispositif de serrage selon la revendication 4,
dans lequel la vis (6) est une vis sans tête qui est pointue à l'extrémité.

6. Dispositif de serrage selon l'une des revendications 1 à 5,
dans lequel l'élément de serrage (7) est une vis avec une tête de vis qui s'appuie sur le contre-palier (3).

7. Dispositif de serrage selon l'une des revendications 1 à 6,
ans lequel le bloc de serrage (4; 14) est ainsi conçu que le décalage entre l'axe longitudinal (9) de la bande de serrage (5; 15) et l'axe longitudinal (10) de la vis (7) est le plus faible possible.

8. Dispositif de serrage selon l'une des revendications 1 à 7,
dans lequel le contre-palier (3) présente une sécurité anti-glissement (3.1; 3.2).

9. Dispositif de serrage selon la revendication 8,
dans lequel le contre-palier (3) présente en tant que sécurité anti-glissement, un renflement (3.1; 3.2),
des stries ou une broche et/ou est coudé.

10. Dispositif de serrage selon l'une des revendications 1 à 9,
dans lequel le bloc de serrage (4) présente une rainure (4.1) pour recevoir la bande de serrage (5).

11. Dispositif de serrage selon l'une des revendications 1 à 10,
dans lequel le bloc de serrage (4) est en queue d'aronde.

12. Élément de meuble comprenant le dispositif de serrage selon l'une des revendications 1 à 11,
- comprenant une première rainure transversale (1.3) dans laquelle le contre-palier (3) est disposé,
- comprenant une première rainure longitudinale (1.4) dans laquelle le bloc de serrage (4; 14) est disposé,
- comprenant une seconde rainure transversale (1.5) dans laquelle un contre-palier supplémentaire (3) est disposé, et
- comprenant une seconde rainure longitudinale (1.6) dans laquelle un bloc de serrage supplémentaire (4; 14) est disposé.

13. Élément de meuble selon la revendication 12,
comprenant une rainure longitudinale supplémentaire dans laquelle la bande de serrage (5; 15) est disposée.

14. Élément de meuble selon la revendication 12 ou 13,
dans lequel la rainure longitudinale (1.4; 1.6), dans laquelle le bloc de serrage (4; 14) est disposé, est en queue d'aronde.

15. Élément de meuble selon l'une des revendications 12 à 14,
comprenant un côté longitudinal (1.2), sachant que le dispositif de serrage (2) est disposé parallèle au côté longitudinal (1.2).

16. Emploi du dispositif de serrage selon l'une des revendications 1 à 11,
pour un plateau de table, un buffet ou un rayonnage.
